(19) **Europäisches Patentamt / European Patent Office / Office européen des brevets**

(11) **EP 2 263 398 B1**

(12) **EUROPEAN PATENT SPECIFICATION**

(45) Date of publication and mention of the grant of the patent:
**31.07.2013 Bulletin 2013/31**

(21) Application number: **08726704.3**

(22) Date of filing: **11.03.2008**

(51) Int Cl.:
*H04W 40/26* (2009.01)    *H04W 28/08* (2009.01)
*H04W 48/08* (2009.01)    *H04W 84/12* (2009.01)
*H04W 24/10* (2009.01)    *H04W 28/18* (2009.01)
*H04W 48/16* (2009.01)

(86) International application number:
**PCT/US2008/003211**

(87) International publication number:
**WO 2009/113976 (17.09.2009 Gazette 2009/38)**

(54) **JOINT ASSOCIATION, ROUTING AND RATE ALLOCATION IN WIRELESS MULTI-HOP MESH NETWORKS**

VERKNÜPFUNG, ROUTING UND RATENZUTEILUNG IN DRAHTLOSEN MULTIHOP-MESH-NETZEN

ASSOCIATION, ROUTAGE ET ATTRIBUTION DE DÉBIT CONJOINTS DANS DES RÉSEAUX MAILLÉS À SAUTS MULTIPLES SANS FIL

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**22.12.2010 Bulletin 2010/51**

(73) Proprietor: **Thomson Licensing**
**92130 Issy-les-Moulineaux (FR)**

(72) Inventors:
• **LIU, Hang**
  **Yardley**
  **Pennsylvania 19067 (US)**
• **LUO, Lin**
  **Piscataway**
  **New Jersey 08854 (US)**
• **WU, Mingquan**
  **Princeton Junction**
  **New Jersey 08550 (US)**

• **LI, Dekai**
  **Fairless Hills**
  **Pennsylvania 19030 (US)**

(74) Representative: **Ruellan-Lemonnier, Brigitte et al**
**Technicolor**
**European Patent Operations**
**1-5 Rue Jeanne d'Arc**
**92443 Issy-les-Moulineaux Cedex (FR)**

(56) References cited:
**WO-A-2008/022059**    **US-A1- 2006 064 497**

• **LIN LUO ET AL: "End-to-End Performance Aware Association in Wireless Municipal Mesh Networks" GLOBECOM WORKSHOPS, 2007 IEEE, IEEE, PI, 1 November 2007 (2007-11-01), pages 1-6, XP031207092 ISBN: 978-1-4244-2024-7**

Remarks:
The file contains technical information submitted after the application was filed and not included in this specification

**Description**

FIELD OF THE INVENTION

The present invention relates to wireless municipal mesh networks and in particular to a method and apparatus for providing joint association, routing and rate allocation in a fair manner.

BACKGROUND OF THE INVENTION

In multi-hop wireless networks, it has been shown that interference has a significant impact on network performance. In one prior art study, the throughput of wireless networks under two models of interference was investigated using a protocol model that assumed interference to be an all-or-nothing phenomenon and a physical model that considered the impact of interfering transmissions on the signal-to-noise ratio. Another prior art study considered the impact of interference on multi-hop wireless network performance. It used a conflict graph to model the effects of wireless interference and presented methods for computing upper and lower bounds on the optimal throughput for the given network and workload.

In addition to throughput, fairness is an important aspect in wireless mesh networks. Fairness has been extensively studied in wireless networks. Yet another prior art study showed that use of current IEEE 802.11 media access protocols for wireless backhaul networks can result in severe unfairness and even starvation for flows farther away from a gateway. Accordingly, the researchers developed a distributed layer 2 fairness algorithm to achieve fairness at the mesh access point (MAP)-aggregate granularity. In another study, the researchers proposed scheduling schemes for maximizing the sum of user utility in wireless networks, and pointed out that max-min fairness can be achieved as a special case using a certain choice of utility function. To derive a solution for max-min fair bandwidth allocation, other researchers used a network model with a number of simplifying assumptions. For example, they assumed that links that do not share nodes will never contend for channel access. Moreover, only single-hop flows were considered. Other prior art studied arbitrary link contention graphs, but once again only considered single-hop flows. In yet another prior art study, the researchers focused on fair bandwidth allocation in multi-hop wireless local area networks (WLANs). Given a determined tree structure, fair bandwidth allocation was performed via a Pump-and-Drain operation. In addition, the researchers designed an algorithm to construct a tree structure for improving throughput. However, none of the prior art studies jointly addressed the problem of association, routing and bandwidth/rate allocation in wireless mesh networks.

It is desirable to have a method and apparatus to jointly address the issues of association, routing and bandwidth/rate allocation in order to allocate the largest possible bandwidth to the participating stations while simultaneously allocate that bandwidth in a fair manner (as evenly as possible).

SUMMARY OF THE INVENTION

In a wireless municipal mesh (muni-mesh) network, the association mechanism, by which the client stations (STAs) become affiliated with the mesh access points (MAPs), and the routing algorithm, through which the logical topology of the relay backhaul is determined, organize the MAPs and the STAs into a two-tiered communication structure. As used herein, "/" denotes alternative names for the same or similar components or structures. That is, a "/" can be taken as meaning "or" as used herein. In the present invention, the problem of joint association, routing and bandwidth/rate allocation in wireless muni-mesh networks is investigated, motivated by the observation that the communication structure determined by association and backhaul routing affects the resulting allocated rates. Wireless interference is modeled using a conflict graph that captures the components specific to the two-tiered muni-mesh networks. The optimization goals are to maximize the network throughput and at the same time, to improve the fairness. First, a Linear Programming (LP) problem is formulated with the objective of maximizing the throughput. However, simply maximizing the throughput may lead to a severe bias on rates allocated to STAs. In order to achieve a good tradeoff between throughput and fairness, a max-min fairness model is considered. A rigorous formulation is provided to maximize the network throughput with a guaranteed maximum minimum rate allocation. Optimal algorithms for joint association, routing and rate allocation are developed herein for the cases allowing multiple MAP association and multi-path backhaul routing. Then the constraints of integral association and single-path routing are considered. If integral association and single-path routing are necessary, the problem formulation falls into mixed integer non-linear programming, which is NP-hard in general. To this end, a method to decouple the problems of logical topology construction and rate allocation is described. A heuristic method is used to construct the two-tiered logical communication topology and then bandwidth is allocated to the STAs within the determined logical topology.

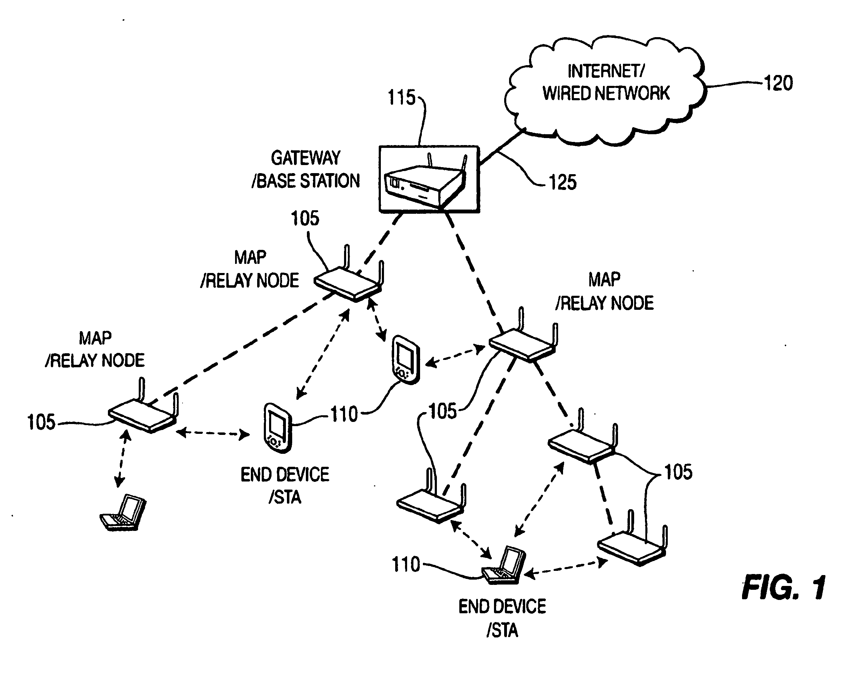

Wireless municipal mesh (muni-mesh) networks are emerging as a promising solution for last-mile broadband Internet access. Unlike flat ad hoc networks, a mesh network has a hierarchical architecture, as shown in Fig. 1. The upper layer (also referred to as relay layer) includes mesh access points (MAPs). The MAPs are interconnected via wireless links to form a multi-hop backhaul, providing network access and data forwarding for the client stations (STAs). Some of the MAPs connect to the wired Internet backbone. These MAPs are referred to as gateways. Client nodes/ STAs (e.g., laptops, computers, processors, mobile terminals, personal digital assistants (PDAs), dual-mode smart phones, etc.) form the lower layer (also referred to as access layer). The STAs associate themselves with nearby MAPs to access the network. A STA does not participate in packet relay and routing process, i.e. it is oblivious of the backhaul topology behind the MAPs. A STA simply sends (or receives) packets to (or from) its associated MAP, in the same way as it does in a single-hop WLAN. Packet delivery in the wireless backhaul is handled by the MAPs through backhaul routing. In general, the relay layer and the access layer work on orthogonal channels to avoid interference.

It is expected that most of the data traffic in a wireless muni-mesh network is between the STAs and the Internet through the MAPs and gateway(s). Such traffic needs to be efficiently delivered on the bandwidth-limited wireless channel through the access link (access layer) and the multi-hop backhaul path (relay layer). In addition, it is important to fairly allocate the limited bandwidth to all STAs, i.e. control the amount of traffic that a STA can send to or receive from the mesh network since users commonly pay the same flat rate to get Internet access.

US2006/0064497 discloses the use of an association control for associating wireless local area network users with at least one wireless local area network access point and thereby achieving simultaneous fairness and load balancing.

In the present invention, the problem of joint association, routing and rate allocation in wireless mesh networks is investigated with the objectives of maximizing the network throughput and improving the fairness. Due to the shared nature of wireless medium, transmissions in a common neighborhood will interfere with each other, which make the rate allocation problem completely different from that in the wired networks. In a wireless muni-mesh network, there is a link between any pair of nodes (STAs and MAPs) if they are in direct transmission range of each other. A node here includes either a STA or a MAP. However, it is association and backhaul routing that determine the set of STA-MAP and MAP-MAP links that are actually being used and carry the data/traffic. Consequently, all the nodes (MAPs and STAs) are organized into a logical topology for communications. Since different logical topologies consist of different sets of links and have different interference patterns, the particular logical topology determines how much bandwidth a STA can be allocated under a given rate allocation policy. It is desirable that the total rate/bandwidth allocated to the STAs is as large as possible and the rate/bandwidth is allocated to each STA as evenly as possible in terms of fairness.

A method and apparatus are described including collecting network information, determining an association, bandwidth allocation and routing scheme based on the collected network information, notifying a mesh access point of the association, the bandwidth allocation and the routing scheme and notifying a client node of its association information. Also described are a method and apparatus including measuring link quality and channel conditions, reporting results of the measuring act to a controller, receiving a routing decision and data forwarding instructions from the controller and forwarding the routing decision and the data forwarding instructions to a client node. Further described are a method and apparatus including measuring link quality and channel conditions, reporting results of the measuring act to a controller, receiving association instructions from the centralized controller and updating previously stored association instructions with the received association instructions.

BRIEF DESCRIPTION OF THE DRAWINGS

The present invention is best understood from the following detailed description when read in conjunction with the accompanying drawings. The drawings include the following figures briefly described below where like-numbers on the figures represent similar elements:

Fig. 1 is a schematic diagram of a network to which the present invention is directed.
Fig. 2a is a schematic diagram of a 3 MAP network.
Fig. 2b is a connectivity graph of the 3 MAP network of Fig. 2a.
Fig. 2c is a conflict graph of the connectivity graph of Fig. 2b.
Fig. 3 is a flowchart of an exemplary embodiment of the method of the present invention in the gateway where the mesh network has a centralized controller and the mesh network uses a centralized MAC protocol.
Fig. 4 is a flowchart of an exemplary embodiment of the method of the present invention for a MAP, the system having a centralized controller and using a centralized MAC protocol.
Fig. 5 is a flowchart of an exemplary embodiment of the method of the present invention for a STA, the system having a centralized controller and using a centralized MAC protocol.
Fig. 6 is a flowchart of an exemplary embodiment of the method of the present invention for a centralized controller using a distributed MAC protocol.
Fig. 7 is a flowchart of an exemplary embodiment of the method of the present invention for a STA, the system having a centralized controller and using a distributed MAC protocol.
Fig. 8 is a flowchart of an exemplary embodiment of the method of the present invention for a MAP, the system having a centralized controller and using a distributed MAC protocol.

Fig. 9 is a block diagram of an exemplary embodiment of a gateway in accordance with the principles of the present invention.

Fig. 10 is a block diagram of an exemplary embodiment of a MAP in accordance with the principles of the present invention.

Fig. 11 is a block diagram of an exemplary embodiment of a STA in accordance with the principles of the present invention.


DETAILED DESCRIPTION OF THE PREFERRED EMBODIMENTS

Referring to Fig. 1, a network system considered in the present invention is illustrated. The network system includes three elements: relay nodes (RNs) 105 (e.g., MAPs), client STAs (end devices) 110, and gateway(s) 115 (base station). The relay nodes may have multiple physical radio interfaces or a single physical radio interface divided into multiple logical interfaces. One or more physical or logical radio interfaces is an access interface. The other interfaces are relay interfaces. The access interface is used for end-users/client nodes/STAs to associate with one or more MAPs/RNs for accessing the network, while the relay interfaces are used to construct a backbone multi-hop wireless network for packet forwarding between relay nodes. One or more relay nodes connect to the wired infrastructure 120 through wired Internet backhaul interface 125, acting as the Internet gateway(s) or base station. Clients/end devices/ STAs 110 do not participate in packet relay or routing process, and need to associate with one or more MAPs/RNs 105 to gain access to the network. The STAs 110 just send (or receive) packets to (or from) their associated MAPs 105. The rest of the packet delivery from the source to the destination is performed by the relay nodes 105 using a routing protocol. In the system model of the present invention, all the wireless interfaces are half-duplex, i.e., the interfaces can only either transmit or receive at a given time.

It is expected that most of the traffic in an infrastructure multi-hop network will be traffic to/from the wired network or Internet. In the present invention, focus is placed on improving the performance of communications between a client/STA and the outside wired Internet via the gateway/base station. To ensure the connectivity of the backhaul, the relay interfaces of all the MAPs are tuned to a common channel. Each MAP supports two interfaces. A MAP's access interface provides network access for the STAs associated with the MAP and the MAP's relay interface is used to construct and communicate over the backhaul relaying data/traffic between the gateway and the STAs associated with the MAP. Note that with modifications to the conflict graphs, the method of the present invention can be generalized to multi-radio multi-channel networks as well. In the access layer, the overlapping cells are tuned to operate on orthogonal channels to avoid inter-cell interference. The relay interface and the access interface also work on orthogonal channels so that the communications at the access layer and at the relay layer do not interfere with one another. A client device/STA only needs to support one single interface for access. The working channel for this interface is determined by the MAP (s) with which the STA is associated. It is assumed that each node transmits at the same fixed transmission power, i.e., there is a fixed transmission range $T_r$ and a fixed interference range $I_r$ associated with each node. In the network, only STAs generate data/traffic. MAPs relay packets between the STAs and the gateway(s).

Given a mesh network with M MAPs and N STAs, a connectivity graph $G(V^+, E)$ is derived as follows, where $V^+ = V_a + V_s$. Every vertex $a \in V_a$ corresponds to a MAP in the network. An edge $e = (a_1, a_2) \in E$ corresponds to a wireless link between $a_1 \in V_a$ and $a_2 \in V_a$ if $d(a_1, a_2) \leq T$, where $d$ is the Euclidean distance between $a_1$ and $a_2$. Each vertex $u \in V_s$ is a STA. There is an edge between u and v if $d(u,v) \leq T_r$ and $v \in V_a$ is a MAP. The edge (u,v) corresponds to a wireless link between STA u and MAP v. The second condition means that STAs only communicate with MAPs. Direct communication between two STAs is not allowed. That is, the STAs do not form a peer-to-peer network among themselves.

In the following, a protocol model is used to define the conditions for a successful wireless transmission and the interference is modeled using a conflict graph. In the protocol model, a transmission between node i and node j is successful if all of the following conditions are satisfied:

1. Node i and node j communicate on the same channel
2. $d(i,j) \leq T_r$, where d(i,j) is the distance between i and j
3. Any node k, such that $d(k,i) \leq I_r$ or $d(k,j) \leq I_r$ remains silent during the transmission

The third condition means that both the sender and the receiver be free of interference. The sender should be free of interference in order to receive the receiver's acknowledgement successfully. Since every node transmits at the same fixed power and radio is inherently a broadcast medium where the communication channel is shared between multiple adjacent nodes within interference range, the interference area of a node i can be imagined as a disk $D_i$ centered at i with radius $I_r$. Without confusion, $D_i$ is also used to denote the set of nodes covered by disk $D_i$ and on the same channel as i, i.e., $D_i$ is used to denote the set of interfering nodes of node i. Using this definition, the set of links/edges interfering with a link e=(i,j) can be written as:

$$I_e = \{(u,v)\,|\,u \in D_i \ or \ u \in D_j \quad or \ v \in D_i \ or \quad v \in D_j\}$$

To incorporate wireless interference into the problem formulation, a conflict graph, G'(V',E') is defined, whose vertices correspond to the links of the connectivity graph G. There exists an edge in G'(V',E') between the vertices $e_1$= (x,y) and $e_2$=(u,v) if in G the links $e_1$ and $e_2$ interfere with each other, i.e., they cannot be active at the same time. Based on the protocol model, an edge is drawn if (u,v) is covered by $I_{xy}$ or $I_{e1}$. In the backhaul relay layer, this encompasses the case where a conflict arises because links (x,y) and (u,v) having an endpoint in common (since relay interfaces work on the same channel, two links sharing an endpoint lie in the interference set of each other). However, things are different for the access layer. Each STA supports only one access interface. The working channel of the interface is not pre-configured. Instead the working channel is dynamically tuned to one of the associated MAPs' working channels. In the problem formulation, dynamic fractional association is permitted, i.e., a STA can associate with more than one MAP, which implies that a STA needs to work on multiple channels in a time-division manner since it has only one radio. Potentially, a STA can associate with all the MAPs within its range $T_r$, so there is a link between the STA and each of such MAPs in the connectivity graph G. Based on the conflict graph construction described above, there would be no edge between any pair of these links in G' because these links work on orthogonal channels. However, due to a single radio each STA has, these links cannot be active at the same time. That is, a STA can work only on one channel and transmit to one MAP at a time. Therefore, the interference set of a STA-MAP link explicitly includes the links that share the same radio as the given link, and consequently an edge is drawn between any pair of such links in the conflict graph G'. Using the conflict graph, the set of links interfering with a link e=(x,y) can be represented in another way:

$$I_e = \{e' \,|\,(e,e') \in E'\}$$

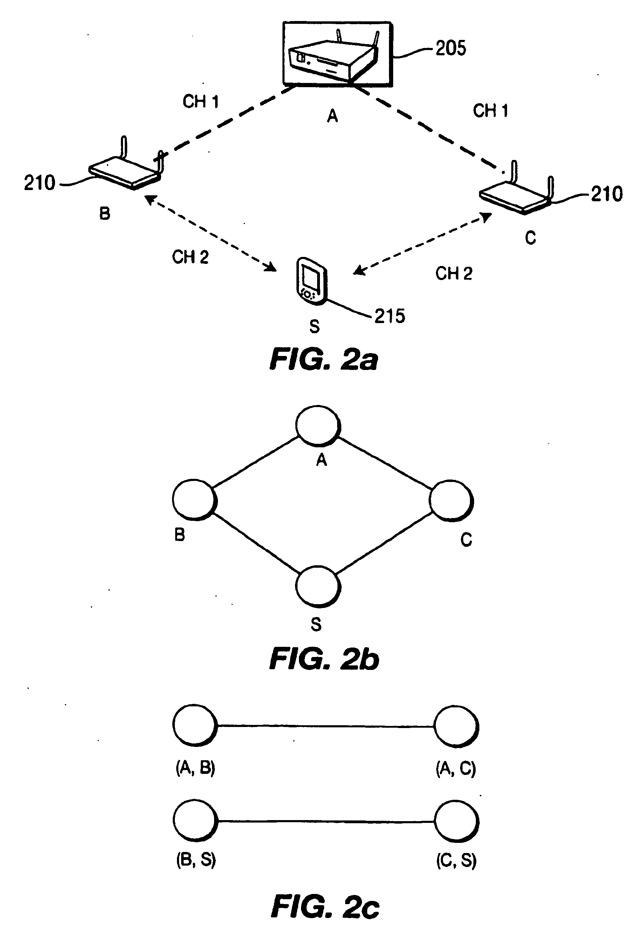

Fig. 2a illustrates the construction of the connectivity graph and the conflict graph in a 3-MAP network, where MAP A is the gateway 205. MAP B 210 and MAP C 210 have a link to A but are out of each other's range. The three MAPs work on channel ch1 in the backhaul. The STA S 215 can potentially associate with both B and C whose access interfaces work on orthogonal channels ch2 and ch3 respectively. Fig. 2b is essentially the same graph as Fig. 2a but with all of the elements represented as points. That is, gateway 205, MAP B 210, MAP C 210 and STA S 215 are all represented by a filled in circle. Fig. 2a is a schematic view of the 3 MAP network and Fig. 2b is a connectivity graph of the same 3 MAP network. Fig. 2c is a conflict graph showing while STA S can connect to both MAP B and MAP C, since it has only one radio interface STA S can only communicate with either MAP B or MAP C at any given time. The BS link and the CS link are on the conflict graph because STA S has only one radio. Gateway 205 can communicate with either or both MAP B or MAP C. However, since the AB link and the AC link have a common endpoint there is a conflict.

Next, mathematically formulating the joint association, routing and rate allocation problem is described. Suppose that there are M MAPs and N STAs in the network. To reach the performance upper limits, fractional association and multi-path routing are first allocated, i.e., a STA can associate with multiple MAPs and in the backhaul a traffic flow can be routed through multiple paths to the gateway. The rate allocation vector for the STAs is denoted by r=$(r_{ij}\,|\,i \in V_s, j \in V_a|$, where $r_{ij}$ is the rate allocated to STA i for its association with MAP j. The total rate allocated to STA i is therefore

$r_i = \sum_j r_{ij}$ and the network throughput is $S(\mathbf{r}) = \sum_{i=1}^{N} \sum_{j=1}^{M} r_{ij}$. When a STA is allocated a total rate of $r_i$, it can communicate with the wired network through the gateway with the total rate of $r_i$. An M-element vector $f = [f_1, f_2, \cdots f_M]$ denotes the traffic volumes at each MAP, where $f_j$ represents the total traffic aggregated for j's associated STAs. Under multi-path routing, $f_j$ may be distributed to multiple paths and cross different set of links to the gateway. $R_{j,e}$ is used to denote how much bandwidth on link e is allocated for transmitting a flow belonging to $f_j$. The capacity of a link $e = (u, v) \in E$ is denoted with $C_{uv}$ or $C_e$.

First, the LP formulation to determine association, routing and rate allocation to maximize the throughput is presented. In the following, h(e) and t(e) are used to denote the head (the sender) and the tail (the receiver) of a link e, respectively. "gw" is used to denote the gateway. The LP problem is called the Maximum Throughput Rate Allocation (MTRA) problem.

$$\hat{S} = \max \sum_{i=1}^{N} \sum_{j=1}^{M} r_{ij} \quad (1)$$

Subject to:

$$\sum_{j:(i,j)\in E} \frac{r_{ij}}{C_{ij}} \leq 1, \quad \forall i \in V_s \quad (2)$$

$$\sum_{i:(i,j)\in E} \frac{r_{ij}}{C_{ij}} \leq 1, \quad \forall j \in V_a \quad (3)$$

$$\sum_{i:(i,j)\in E} r_{ij} \leq f_j, \quad \forall j \in V_a \quad (4)$$

$$\sum_{e:h(e)=j} R_{j,e} = f_j, \quad \forall j \in V_a \setminus \{gw\} \quad (5)$$

$$\sum_{e:t(e)=j} R_{j,e} = 0, \quad \forall j \in V_a \setminus \{gw\} \quad (6)$$

$$\sum_{e:h(e)=j} R_{j,e} = 0 \quad j = gw \quad (7)$$

$$\sum_{e:h(e)=v} R_{j,e} = \sum_{e:t(e)=v} R_{j,e} \quad \forall v \in V_a \setminus \{j, gw\} \quad (8)$$

$$\sum_{e \cup I, } \sum_{j=1}^{M} \frac{R_{j,e}}{C_e} \leq 1 \quad \forall e \in E \quad (9)$$

$$r \geq 0, \quad R \geq 0, \quad f \geq 0 \quad (10)$$

In inequalities (2) and (3), $R_{ij}/C_{ij}$ the fraction of STA i's time to send its own traffic to MAP j. (2) represents the radio constraint on a STA (the STA transmits to multiple associated MAPs in a time-division manner), indicating that the total rate allocated to STA i should not require more transmission time than STA i actually has. The inequality (3) means that the total traffic imposed on MAP j by its associated STAs should require no more receiving time than MAP j has. Equations and inequalities (4)-(8) present the law of flow conservation. Inequality (4) states that a MAP's traffic is the sum of the traffic from its associated STAs. Equation (5) shows that MAP j's traffic is distributed to its outgoing links, however, the sum of the rates on these links should equal $f_j$. Equation (6) indicates that in the backhaul there is no flow belonging to $f_j$ on incoming links to MAP j since j is the source to the gateway. Equation (7) holds that there is no flow belonging to $f_j$ on outgoing links of the gateway, because gateway is the sink. Equation (8) represents that, for any MAP, except the source to the gateway in the backhaul and the gateway, the amount of incoming flow is equal to the amount of outgoing flow. Inequality (9) is the condition of feasibility, which accounts for wireless interference and represents that the total usage of the links in an interference set should not exceed 1. The objective of equation (1) is to maximize the network throughput.

It is shown below that rate allocation with the objective to maximize the network throughput may result in a severe bias among STAs, i.e., some STAs are allocated very high rates, while others are starved. In wireless muni-mesh networks, it is important to fairly allocate resources among STAs because users generally pay the same flat rate to get Internet access service. Next, the fairness issue is addressed based on a max-min fairness model. The LP formulations are presented to maximize the minimum rate allocated to the STAs and then to maximize the throughput with the max-min rate guaranteed. This problem is called Max-Min Rate Allocation (MMRA) problem and is formulated in two steps.

Step 1:

$$r^* = \max r_{min} \quad (11)$$

Subject to:

Constaints (2)-(9)

$$\sum_{j:(i,j)\in E} r_{ij} \geq r_{min} \quad \forall i \in V, \quad (12)$$

$$r \geq 0, \quad R \geq 0, \quad f \geq 0, \quad r_{min} \geq 0 \quad (13)$$

Step 2:

$$\hat{S} = \max \sum_{i=1}^{N} \sum_{j=1}^{M} r_{ij} \quad (14)$$

Subject to

Constraints (2) - (9)

$$\sum_{j:(i,j)\in E} r_{ij} \geq r^* \quad \forall i \in V, \quad (15)$$

$$r \geq 0, \quad R \geq 0, \quad f \geq 0$$

In step 1, the minimum rate ($r_{min}$) allocated to the STAs is maximized. Since a STA can associate with multiple MAPs, the total rate allocated to a STA, for example STA i, is $r_i = \sum_{j:(i,j)\in E} r_{ij}$, where j is a MAP with which STA i associates. The first eight conditions, equations and inequalities (2)-(9), are the same as in the maximum throughput rate allocation problem. Inequality (12) states that the rate allocated to any STA should be no less than $r_{min}$. By solving this LP problem, it is ensured that for any other rate allocation vector ($r'_{ij}$), the minimum rate allocated is $\min(r_{ij}) \leq r^*$. The resulting rate allocation from step 1 ensures the maximum minimum rate allocation value, however, it may not efficiently use the network resources.

In step 2, the network throughput is maximized while making sure that each STA is allocated a rate of at least r*. Therefore, solving step 1 to obtain r* and then solving step 2 can provide maximum throughput while ensuring max-min fairness.

So far, fractional association and multi-path routing have been considered. In fractional association and multi-path routing a STA can associate with multiple MAPs and the traffic from a source may be routed to the gateway via multiple paths. Many existing association schemes are confined to integral association, where a STA associates with only one MAP. Many current routing protocols are restricted to single-path routing. It is, therefore, useful to derive the performance bounds for integral association and single-path routing. The method by which integral association and single-path routing are introduced is by adding two sets of 0-1 variables, $a_{ij} \in \{0,1\}$ and $u_{j,e} \in \{0,1\}$ where $a_{ij}$ indicates whether or not STA i associates with MAP j, while $u_{j,e}$ indicates whether or not the link e is used by a flow belonging to $f_j$. The problem formulations described above can be extended for integral association and single-path routing by replacing $r_{ij}$ with $a_{ij}r_{ij}$ and $R_{j,e}$ with $u_{j,e}R_{j,e}$, and adding the following two conditions:

1. At each STA i, $\sum_{j:(i,j)\in E} a_{ij} = 1$, where $a_{ij} \in \{0,1\}$

2. For any $f_j$, at any MAP a, $\sum_{e:h(e)=a} u_{j,e} \leq 1$, where $u_{j,e} \in \{0,1\}$

The first condition states that a STA can associate with only one MAP. The basic idea of the second condition is that in a single-path routing, at any MAP a, there is at most one outgoing link that carries flow j. This problem formulation falls into mixed integer non-linear programming. In theory, solving such a problem is NP-hard.

To avoid solving a NP-hard problem under integral association and single-path routing, a method to decouple the problems of association, routing and rate allocation is described. Heuristic association and routing algorithms are presented to construct the logical topology used for communications, and then perform rate allocation within this logical topology. This scheme is practical but gives sub-optimal solutions.

The airtime cost specified in IEEE 802.11s is used as the routing metric. Airtime cost reflects the amount of channel resources consumed by transmitting a frame over a particular link. The airtime cost for a link is calculated as

$$C_a = (O + \frac{S}{r}) \frac{1}{1-E}$$

where O is the channel access overhead, including frame headers, training sequences, access protocol overhead, and S is the standard test frame length. Some representative values in IEEE 802.11b networks for these constants are: $O = 699\mu s$, and S=1024 bytes. r and E are the link data rate and the frame error rate for the test frame size S under the current channel conditions, respectively. These values can be estimated locally. The cost of a path is simply the summation of the airtime cost of the links on the path.

The routing protocol used in the backhaul is the Hybrid Wireless Mesh Protocol (HWMP) specified in the IEEE 802.11s standard. The HWMP defines a proactive routing mode and an on-demand routing mode. The proactive mode permits proactively establishing a route for communications with certain critical mesh nodes such as a gateway. With proactive routing, the data forwarding between the MAPs and the gateway can begin immediately without route discovery delay and extra data buffering. The on-demand routing mode is based on the enhanced Ad Hoc On Demand Distance Vector (AODV) protocol [IETF RFC 3561] and any mesh node may initiate an on-demand route discovery through route request/route reply procedure. The on-demand mode is for peer MAP-to-peer MAP communications. Focus herein is on proactive routing for communications between MAPs and gateway.

In the proactive routing mode, the gateway periodically advertises itself by broadcasting root/route announcement messages that contan a path cost field and a sequence number. The value of the path cost is initialized to zero at the gateway and updated at intermediate MAPs during the propagation of the root/route announcement message. The sequence number is incremented each time a root/route announcement is sent by the gateway. Upon receiving a root/route announcement, a MAP updates the cost of the incoming path by adding the cost of the incoming link to the path cost carried in the root/route announcement. If the sequence number in the received message is larger than what has been seen up to this point in time or if the sequence number is the same but the path cost is better than the current value, the MAP updates its path to the gateway and rebroadcasts the root/route announcement. The topology builds away from the gateway as this process repeats until all the MAPs in the backhaul receive the root/route announcement message. In this way, a path is proactively established and maintained between each MAP and the gateway. The established paths form a tree rooted at the gateway. Note that other routing metrics and routing protocol can be used in the backhaul to establish the path between the MAPs and gateway. Note also that the reverse paths are established by the nodes of the tree replying to the announcement message.

In an earlier application (published as EP2127423), an end-to-end performance aware association mechanism was taught. The association metric, called JSEL, was defined as:

$$JSEL = \beta Q_{al} + (1 - \beta)C_{bp} \quad (16)$$

where $Q_{a1}$ was the access link metric that reflected the quality of the access link between the STA and the MAP. For a MAP j and a joining STA i,

$$Q_{al}(i, j) = \frac{1}{1 - E_i} \sum_{n \in A(j) \cup i} \frac{S}{r_n} \quad (16a)$$

where A(j) denotes the set of STAs that currently associate with MAP j. S is the test frame size (e.g, 1024 bytes) and $r_n$ is the link data rate between STA n and MAP j. $E_i$ denotes the packet loss rate on the link between STA i and MAP j if i transmits frames of size S at the data rate $r_i$. $C_{bp}$ is the cumulative cost of the backhaul path from the MAP to the gateway. It is carried in the MAP beacon and probe response frames, which makes such information available to the STAs. $\beta \in [0,1]$ is a tunable parameter, which is used to balance the access link quality and backhaul path quality in equation (16).

Association and backhaul routing define a logical topology for communications in the network, i.e., indicating which links are actually used for carrying traffic. The next problem is to perform rate allocation within this logical communication topology to maximize the throughput or maximize the throughput with guaranteed max-min rate. The two formulated problems are denoted as MTRA-Suboptimal and MMRA-Suboptimal, respectively.

Given the logical communication topology, i.e., associations of STAs with MAPs and backhaul paths between each MAP and the gateway are known, the optimization variables are the rates allocated to the STAs. An N-element vector $r=[r_1, r_2,..., r_N]$ is used to denote the rate allocation vector for the STAs, where $r_i$ is the rate allocated to STA i. A (j) denotes the set of STAs that associate with MAP j, and use P(j) is used to denote the backhaul path between MAP j and the gateway. MAP j's data/traffic, denoted as $f_j$, is the total traffic aggregated from all j's associated STAs. The capacity of STA i's access link is denoted as $C_i$, and for a link e in the backhaul, $C_e$ denotes link e's capacity. In the following, the problem formulation for maximizing the throughput with guaranteed max-min rate value is shown. The MMRA problem includes two steps.

Step 1:

$$r^* = \max r_{min} \quad (17)$$

Subject to:

$$r_i \leq C_i, \quad \forall i \in V_s \quad (18)$$

$$\sum_{i:i \in A(j)} \frac{r_i}{C_i} \leq 1, \quad \forall j \in V_a \quad (19)$$

$$\sum_{i:i \in A(j)} r_i = f_j, \quad \forall j \in V_a \quad (20)$$

$$\sum_{e \cup I, \, j:e \in P(j)} \sum \frac{f_j}{C_e} \leq 1 \quad \forall e \in E \quad (21)$$

$$r_i \geq r_{min}, \quad \forall i \in V_s \quad (22)$$

$$r \geq 0, \quad R \geq 0, \quad r_{min} \geq 0 \quad (23)$$

Step 2:

$$\hat{S} = \max \sum_{i=1}^{N} r_i \quad (24)$$

Subject to

$$r_i \leq C_i, \quad \forall i \in V_s \quad (25)$$

$$\sum_{i:i \in A(j)} \frac{r_i}{C_i} \leq 1, \quad \forall j \in V_a \quad (26)$$

$$\sum_{i:i\in A(j)} r_i = f_j, \quad \forall j \in V_a. \quad (27)$$

$$\sum_{e\cup I, j:i\in P(j)} \frac{f_j}{C_e} \leq 1 \quad \forall e \in E \quad (28)$$

$$r_i \geq r^*, \quad \forall i \in V_s \quad (29)$$

$$\mathbf{r} \geq 0, \quad f \geq 0, \quad (30)$$

The objective of equation (17) is to maximize the minimum rate allocated to STAs. Inequalities (18) and (25) indicate that the rate allocated to a STA cannot exceed the access link capacity. Inequalities (19) and (26) mean that the total traffic imposed on MAP j by its associated STAs should require no more receiving time than MAP j actually has. Equations (20) and (27) state that a MAP's traffic is the total traffic aggregated from its associated STAs. Inequalities (21) and (28) are the condition of feasibility, which accounts for wireless interference. They state that the usage of the links in an interference set should not exceed 1. Inequality (22) requires that the rate allocated to any STA should be no less than $r_{min}$. After solving r*, in step 2 the throughput is maximized while making sure that each STA is allocated a rate of at least r* as indicated in equation (24). Inequality (29) indicates that the rate allocated to any STA should be no less than r*. Inequalities (23) and (30) state that the allocated rate should be equal to or greater than 0.

The present invention is based on a centralized method to achieve joint optimization of association, routing and rate allocation in two-tiered muni-mesh networks based on a max-min fairness model. An objective is to improve the throughput without sacrificing fairness, i.e. maximizing the network throughput with guaranteed max-min rate allocation. In practice, it is difficult, if not impossible, to provide short-term throughput and fairness optimization because of the dynamics of network topology, link status and traffic. The method described herein achieves long-term max-min fairness to all the STAs. It can be used as the foundation in the design of a muni-mesh network control system for addressing the fairness issue that also maximizes the network throughput.

In terms of implementation, the system and method of the present invention first need information on the mesh backhaul network such as physical mesh topology, link data rate, link's interference set, as well as information on each STA such as the access link data rate that the STA experiences to/from each MAP. Second, the system and method of the present invention need a means to determine the logical two-tier logical communication topology including backhaul routing and STA-MAP association, and fair bandwidth allocation to each STA. Third, the system and method of the present invention need a mechanism to enforce these routing, association and rate allocation decisions. Note that if the wireless link is symmetric, the total bandwidth of upstream and downstream traffic for a STA can be allocated using the algorithm described above. Based on the traffic pattern, the total bandwidth is divided into the upstream and downstream flows.

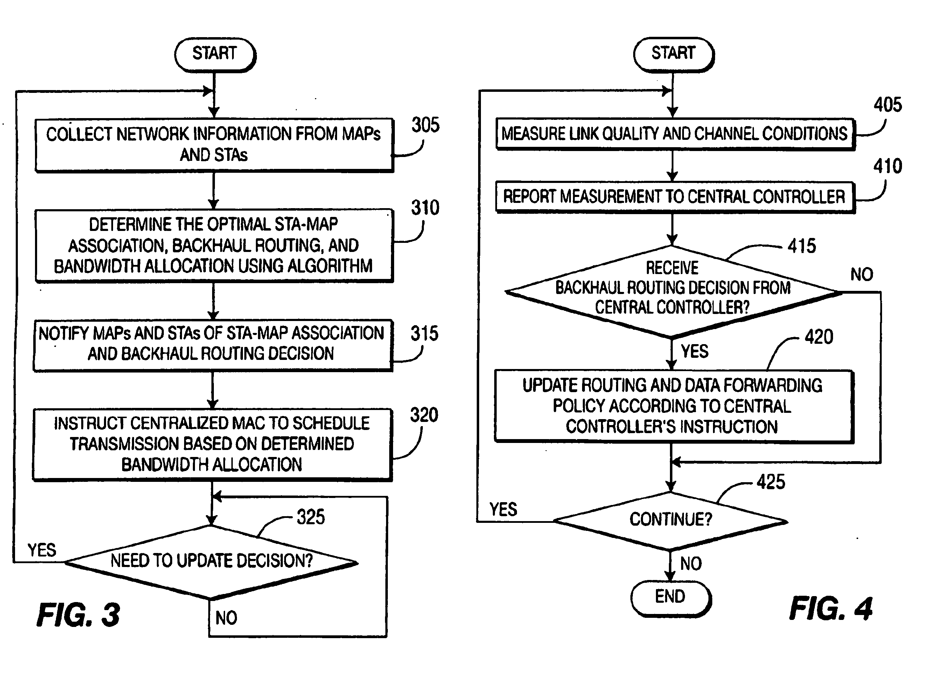

Fig. 3 is a flowchart of an exemplary embodiment of the method of the present invention in the gateway where the mesh network has a centralized controller and the mesh network uses a centralized Medium Access Control (MAC) protocol such as IEEE 802.16j (multi-hop relay protocol). If the mesh network uses a centralized MAC protocol such as IEEE 802.16j multi-hop for relay networks, each MAP and STA periodically conducts local measurements and estimations of the necessary information such as its link data rate and channel conditions. The collected information is reported to the gateway, which executes the method of the present invention to determine the optimal STA-MAP association, backhaul routing, and bandwidth allocation to each STA (Fig. 3). The gateway can update its decisions periodically based on the collected information and any new information that is collected. After determining the routing and STA-MAP association, the gateway informs the MAPs and STAs of its decision.

Still referring to Fig. 3, the gateway collects network information from the MAPS and STAs at 305. The gateway then determines at 310 the optimal STA-MAP association backhaul routing and bandwidth allocation using the method of the present invention. The method can either achieve maximum throughput rate allocation as described in equations (1) to (10) or max-min rate allocation as described in equations (11) to (15). At 315 the gateway then notifies the MAPs and STAs of the MAP-STA association and backhaul routing that the gateway has determined. The gateway performs the bandwidth allocation via the centralized MAC protocol. The gateway then instructs the centralized MAC protocol to schedule transmissions based on the determined bandwidth allocation at 320. The gateway then performs a test at 325 to determine if it has received new information and needs to update any decisions it has made based on receiving new information from the MAPs and the STAs.

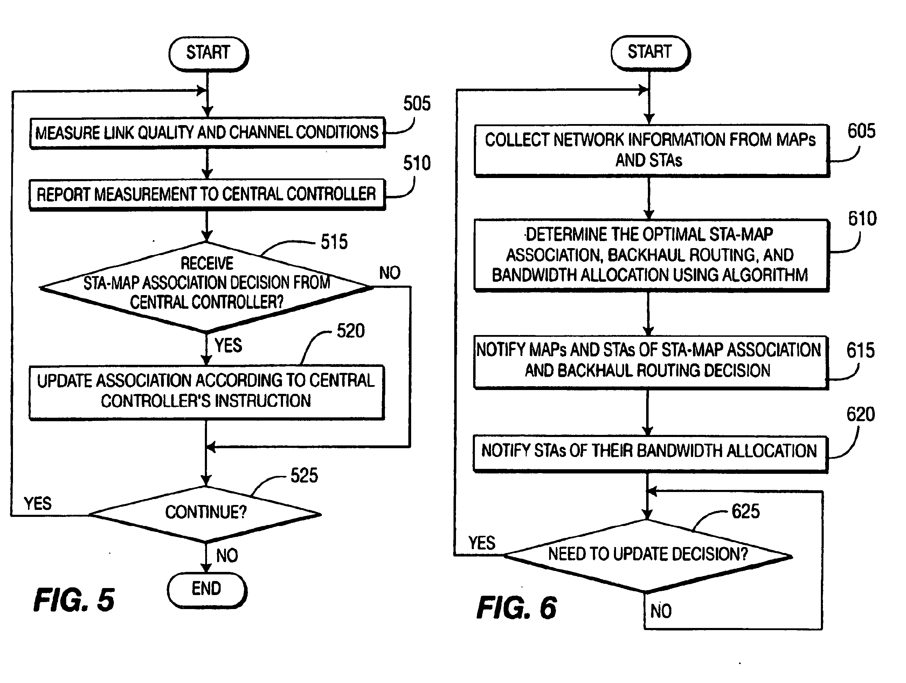

The MAPs (Fig. 4) and STAs (Fig. 5) perform routing and association process accordingly. Since a centralized MAC protocol is used, the gateway can enforce the STA's bandwidth allocation by scheduling the transmission.

Fig. 4 is a flowchart of an exemplary embodiment of the method of the present invention for a MAP, the system having a centralized controller and using a centralized MAC protocol. At 405 the MAP measures the link quality and channel conditions. The MAP reports (transmits/forwards) the measured link quality and channel conditions to the gateway at 410. A test is performed at 415 to determine if the MAP has received a backhaul routing decision/instructions from the central controller (resident in the gateway). If the MAP has received a backhaul routing decision from the central controller then the MAP updates routing and data forwarding/transmitting instructions/policy previously stored in the MAP and forwards the updated routing and data forwarding/transmitting instructions to the STAs associated with the MAP according to the instructions/decision received at 420. Based on the association decision, the controller (via the MAP) informs of a STA which MAP the STA needs to associate with and whether a STA currently associated with this MAP needs to change its association to another MAP. A test is performed at 425 to determine if the MAP is to continue. If the MAP is to continue, then the method proceeds to 405. If the MAP is not to continue then the MAP ceases its operation of measuring link quality and channel conditions. If the MAP has not received a backhaul routing decision/instructions from the central controller then the method proceeds to 425.

Fig. 5 is a flowchart of an exemplary embodiment of the method of the present invention for a STA, the system having a centralized controller and using a centralized MAC protocoL At 505 the STA measures the link quality and channel conditions. The STA reports (transmits/forwards) the measured link quality and channel conditions to the gateway at 510 (via the MAP). A test is performed at 515 to determine if the STA has received an association decision/instructions from the central controller (resident in the gateway) via the MAP with which the STA is associated. If the STA has received association instructions from the central controller (via the associated MAP) then the STA updates its association information according to the instructions/decision received at 520. A test is performed at 525 to determine if the STA is to continue. If the STA is to continue, then the method proceeds to 505. If the STA is not to continue then the STA ceases its operation of measuring link quality and channel conditions. If the STA has not received an association decision/instructions from the central controller at 515 then the method proceeds to 525.

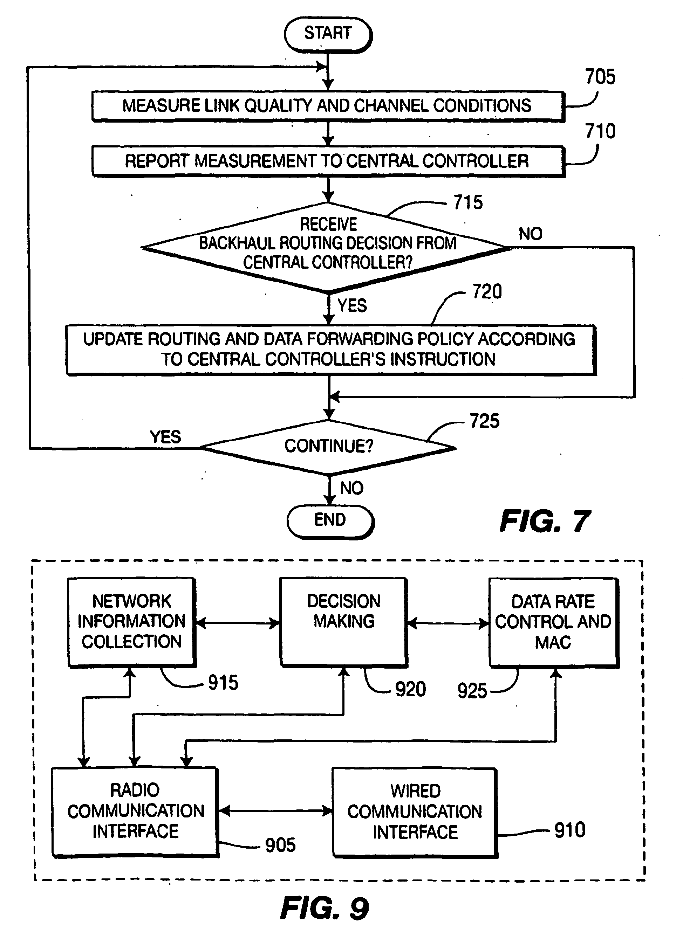

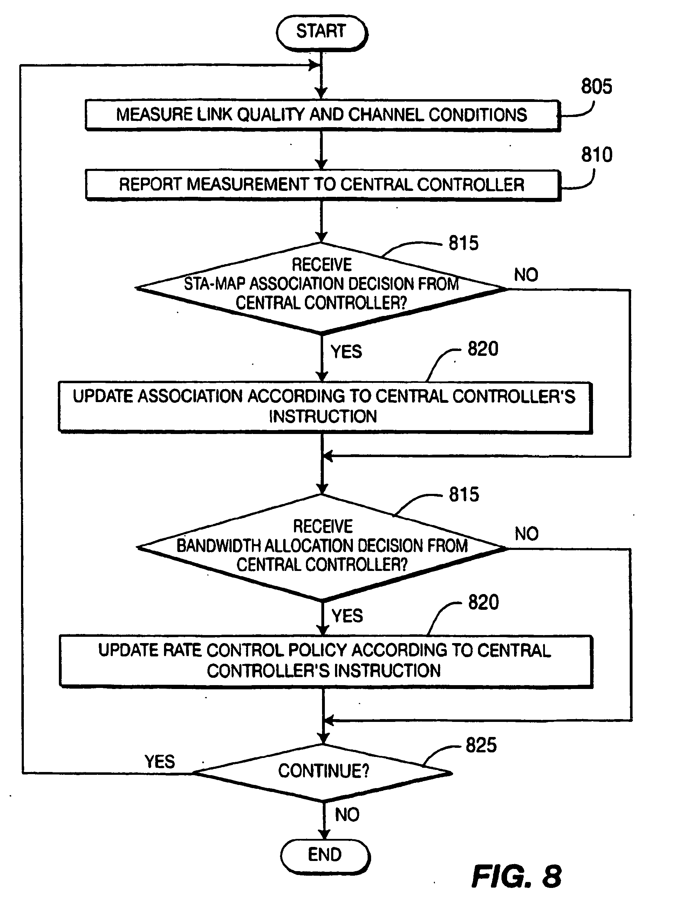

If the mesh network uses a distributed MAC protocol such as IEEE 802.11 Distributed Coordination Function, the STAs and MAPs can be equipped with a module (software, hardware or firmware or any combination therof) that periodically collects the information required by the method of the present invention. The collected information is reported to a central controller. The central controller makes or periodically updates its decisions of the optimal STA-MAP association, backhaul routing, and bandwidth allocation to each STA using the method of the present invention (Fig. 6). The method can either achieve maximum throughput rate allocation as described in equations (1) to (10) or max-min rate allocation as described in equations (11) to (15). The central controller notifies the STAs and MAPs of its decision. The STAs (Fig. 7) and MAPs (Fig. 8) perform the corresponding association and routing process according to the central controller's instructions. Since a distributed MAC protocol is used, a STA can be equipped with a module (software, hardware or firmware or any combination thereof) that regulates its upstream traffic into the network and the gateway can regulate the downstream traffic for the STA. The central controller may recalculate and update the optimal routing, association and bandwidth allocation over a relative long interval by using the maximum throughput rate allocation algorithm described in equations (1) to (10) or the max-min fairness rate allocation algorithm described in equations (11) to (15). Between two successive executions, it can only update the bandwidth allocation within the determined logical topology based on the rate allocation algorithm described in equations (17) to (30). In addition, if the distributed routing and association method is used for constructing the logical two-tier communication topology, the central controller only performs the bandwidth allocation within the determined logical topology using equations (17) to (30). After determining a new bandwidth allocation, the central controller informs the STA of its decision. The STA updates its bandwidth allocation parameters.

Fig. 6 is a flowchart of an exemplary embodiment of the method of the present invention for a centralized controller using a distributed MAC protocol. The gateway collects network information from the MAPS and STAs at 605. The gateway then determines at 610 the optimal STA-MAP association backhaul routing and bandwidth allocation using the method of the present invention. The method can either achieve maximum throughput rate allocation as described by equations (1) to (10) or max-min rate allocation as described by equations (11) to (15). At 615 the gateway then notifies the MAPs and STAs of the MAP-STA association and backhaul routing that the gateway has determined. The gateway also notifies the STAs (via their associated MAPs) of their bandwidth allocation at 620. The gateway then performs a test at 625 to determine if it has received new information from the MAPs and the STAs and needs to update any decisions it has made based on receiving new information from the MAPs and the STAs.

Fig. 7 is a flowchart of an exemplary embodiment of the method of the present invention for a MAP, the system having a centralized controller and using a distributed MAC protocol. At 705 the MAP measures the link quality and channel conditions. The MAP reports (transmits/forwards) the measured link quality and channel conditions to the gateway at 710 (via the MAP). A test is performed at 715 to determine if the MAP has received a backhaul routing decision/instructions from the central controller (resident in the gateway). If the MAP has received a backhaul routing decision from the central controller then the MAP updates routing and data forwarding/transmitting instructions/policy previously stored in the MAP and forwards the updated routing and data forwarding/transmitting instructions according to the instructions/decision received at 720. A test is performed at 725 to determine if the MAP is to continue. If the MAP is to continue, then the method proceeds to 705. If the MAP is not to continue then the MAP ceases its operation of measuring link quality and channel conditions. If the MAP has not received a backhaul routing decision/instructions from the central controller then the method proceeds to 725.

Fig. 8 is a flowchart of an exemplary embodiment of the method of the present invention for a STA, the system having a centralized controller and using a distributed MAC protocol. At 805 the STA measures the link quality and channel conditions. The STA reports (transmits/forwards) the measured link quality and channel conditions to the gateway at 810. A test is performed at 815 to determine if the STA has received association decision/instructions from the central controller (resident in the gateway). If the STA has received association instructions from the central controller then the STA updates the associations. A test is performed at 825 to determine if the STA has received bandwidth allocation decisions/instructions from the centralized controller. If the STA has received bandwidth allocation instructions from the centralized controller then the STA updates the rate control policy according to the instructions received at 830. A test is performed at 835 to determine if the STA is to continue. If the STA is to continue, then the method proceeds to 805. If the STA is not to continue then the STA ceases operation of measuring link quality and channel conditions. If the MAP has not received a bandwidth allocation instructions from the centralized controller then the method proceeds to 835. If the MAP has not received association instructions/decisions form the centralized controller (815) then the method proceeds to 825.

Fig. 9 is a block diagram of an exemplary embodiment of a gateway in accordance with the principles of the present invention. The gateway has a radio interface 905, which may be a single radio interface with multiple logical interfaces or may be multiple radio interfaces in order to communicate with the MAPs directly and with the STAs via their associated MAPs. Radio interface 905 is also used to communicate with the Internet or any other wired line network via wired communication interface 910. Radio interface 905 also communicates with network information collection module 915, which can include one or more databases, storage devices or memory in order to store the link quality and channel condition information from the MAPs and STAs that the gateway receives from the MAPs and STAs. The network information collection module 915 also communicates with decision making module 920, which makes decisions regarding backhaul routing, associations and bandwidth allocations based on the information collected and stored in network information collection module 915. Decision making module also communicates with radio communication interface module 905 in order to transmit the decisions it makes to the MAPs and STAs (via their associated MAPs). Decision making module 920 also communicates with data rate control module and MAC protocol module 925. Data rate control and MAC module 925 is also in communications with radio communication interface module 905 in order to control the amount of data traffic for each STA.

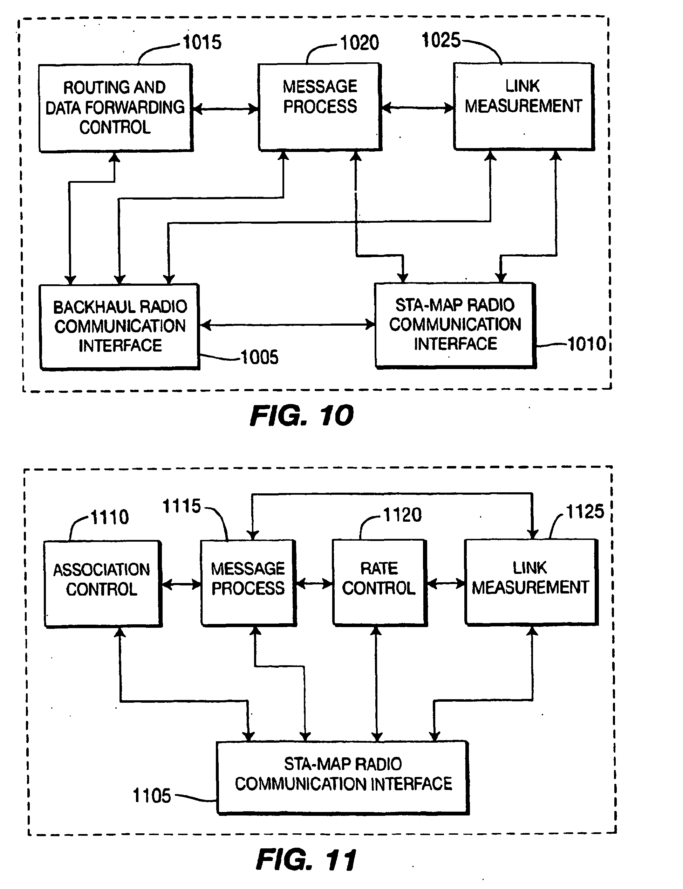

Fig. 10 is a block diagram of an exemplary embodiment of a MAP in accordance with the principles of the present invention. The MAP includes a backhaul radio communication interface module 1005, which is used to communicate with other MAPs in the relay layer as well as to communicate with the gateway. Backhaul radio communication interface module also communicates with the STA-MAP communication interface module 1010 to forward data or control packets from backhaul to the STAs, or vice versa. Backhaul radio communication interface module also communicates with routing and data forwarding control module 1015, message process module 1020 and link measurement module 1025. Routing and data forwarding control module 1015 also communicates with message process module 1020. Message process module also communicates with both backhaul radio communication interface module 1005 and STA-MAP radio communication interface module 1010. Message process module processes messages received from or destined for the STAs as well as messages received from or destined for other MAPs in the relay layer as well messages received from or destined for the gateway. Message process module 1020 also communicates with link measurement module 1025, which receives and stores link quality measurement and channel condition information from the STAs with which this MAP is associated as well as making link quality and channel condition measurements for this MAP. Link quality measurement module also communicates with backhaul radio communication interface module 1005 in order to forward/transmit the link quality and channel conditions to other MAPs in the relay layer as well as to communicate the link quality and channel condition information to the gateway. Link measurement module 1025 also communicates with STA-MAP radio communication interface module 1010 in order to receive link quality and channel condition information from its associated STAs.

Fig. 11 is a block diagram of an exemplary embodiment of a STA in accordance with the principles of the present invention. The STA includes STA-MAP radio communication interface module 1105, which communicates with association control module 1110, message process module 1115, rate control module 1120 and link measurement module 1125. STA-MAP radio communication interface module 1105 provides the radio communication interface to communicate with the MAPs with which this STA is associated. A STA has only one physical radio interface but may have multiple logical radio interfaces. That is, a STA can be associated with multiple MAPs and if so, communicates with them using a time division multiplexing scheme. Association control module 1110 receives the association instructions from the gateway (via the MAPs with which this STA is associated) and stores the association information as well as forming and establishing those connections via messages exchanged between itself and its associated MAPs. The messages are exchanged via the STA-MAP radio communication interface module 1105. Association control module 1110 also communicates with message process module 1115, which processes messages received from or destined for the MAPs associated with this STA as well as messages received from or destined for the gateway. Message process module 1115 also communicates with rate control module 1120. Rate control module 1120 receives the rate control instructions from the gateway (via the MAPswith which this STA is associated) and stores the rate control information as well as operating in accordance with the rate control instructions. The STA also has link measurement module 1125 that is in communication with message process module 1115 and that measures link quality and channel conditions in order to provide that information to the gateway via its associated MAPs.

It is to be understood that the present invention may be implemented in various forms of hardware (e.g. ASIC chip), software, firmware, special purpose processors, or a combination thereof, for example, within a server, an intermediate device (such as a wireless access point or a wireless router) or mobile device. Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar innplementations or configurations of the present invention.

## Claims

1.  A method, said method comprising:

    collecting (605) network information;
    **characterized in that** it further involves steps of
    determining (610) a backhaul routing scheme, an association and bandwidth allocation based on said collected network information;
    notifying a mesh access point of said association, said bandwidth allocation and said backhaul routing scheme (615);
    notifying (615) a client node of said association, wherein said association is a mechanism by which said client node becomes affiliated with said mesh access point; and
    notifying (620) said client node of said bandwidth allocation for said client node.

2.  The method according to claim 1, further comprising scheduling a data transmission based on said bandwidth allocation.

3.  The method according to claim 1, wherein said collecting act is accomplished via one of a centralized medium access control protocol and a distributed medium access control protocol and wherein said method is performed by a centralized controller resident in a gateway.

4.  The method according to claim 1, wherein said determining act further comprises determining one of a maximum throughput bandwidth rate allocation and a maximum minimum bandwidth rate allocation.

**5.** The method according to claim 2, wherein said scheduling act is accomplished via a centralized medium access control protocol.

**6.** The method according to claim 1, further comprising receiving updated network information.

**7.** An apparatus comprising:

means (915) for collecting network information;
**characterized in that** it further comprises:

means (920) for determining a backhaul routing scheme, an association and bandwidth allocation based on said collected network information;
means (905) for notifying a mesh access point of said association, said bandwidth allocation and said backhaul routing scheme;
means (905) for notifying a client node of said association, wherein said association is a mechanism by which said client node becomes affiliated with said mesh access point; and
means (905) for notifying said client node of said bandwidth allocation for said client node.

**8.** The apparatus according to claim 7, further comprising means for scheduling a data transmission based on said bandwidth allocation.

**9.** The apparatus according to claim 7, wherein said means for collecting is accomplished using one of a centralized medium access control protocol and a distributed medium access control protocol and wherein apparatus is a centralized controller resident in a gateway.

**10.** The apparatus according to claim 7, wherein said means for determining further comprises one of means for determining a maximum throughput bandwidth rate allocation and a maximum minimum bandwidth rate allocation.

**11.** The apparatus according to claim 8, wherein said means for scheduling is accomplished using a centralized medium access control protocol.

**12.** The apparatus according to claim 7, further comprising means for receiving updated network information.

**13.** A method for operating a mesh access point, said method comprising, at said mesh access point
measuring link quality and channel conditions;
reporting results of said measuring act to a controller;
**characterized in that** it further involves, at said mesh access point, steps of:

receiving a backhaul routing scheme, an association and bandwidth allocation from said controller; and
forwarding said backhaul routing scheme, said association and bandwidth allocation to a client node.

**14.** An apparatus for operating a mesh access point comprising:

means for measuring link quality and channel conditions;
means for reporting results of said measuring act to a controller;
**characterized in that** it further comprises:

means for receiving a backhaul routing scheme, an association and bandwidth allocation from said controller; and
means for forwarding said backhaul routing scheme, said association and bandwidth allocation to a client node.

**Patentansprüche**

**1.** Verfahren, wobei das Verfahren umfasst:

Erheben (605) von Netzinformationen;

**dadurch gekennzeichnet, dass** es ferner die folgenden Schritte umfasst:

Bestimmen (610) eines Backhaul-Routing-Schemas, einer Zuordnung und einer Bandbreitenzuteilung auf der Grundlage der erhobenen Netzinformationen;
Benachrichtigen eines Maschenzugangspunkts über die Zuordnung, die Bandbreitenzuteilung und das Backhaul-Routing-Schema (615);
Benachrichtigen (615) eines Client-Knotens über die Zuordnung, wobei die Zuordnung ein Mechanismus ist, durch den der Client-Knoten mit dem Maschenzugangspunkt verknüpft wird; und
Benachrichtigen (620) des Client-Knotens über die Bandbreitenzuteilung für den Client-Knoten.

2. Verfahren nach Anspruch 1, das ferner das Planen einer Datenübertragung auf der Grundlage der Bandbreitenzuteilung umfasst.

3. Verfahren nach Anspruch 1, bei dem die Tätigkeit des Erhebens über ein zentralisiertes Medienzugangskontrollprotokoll oder über ein verteiltes Medienzugangskontrollprotokoll ausgeführt wird und bei dem das Verfahren durch einen zentralisierten Controller, der in einem Gateway liegt, ausgeführt wird.

4. Verfahren nach Anspruch 1, bei dem die Tätigkeit des Bestimmens ferner das Bestimmen einer Bandbreitenratenzuteilung mit maximalem Durchsatz oder einer Maximum-Minimum-Bandbreitenratenzuteilung umfasst.

5. Verfahren nach Anspruch 2, bei dem die Tätigkeit des Planens über ein zentralisiertes Medienzugangskontrollprotokoll ausgeführt wird.

6. Verfahren nach Anspruch 1, das ferner das Empfangen aktualisierter Netzinformationen umfasst.

7. Vorrichtung, die umfasst:

ein Mittel (915) zum Erheben von Netzinformationen;
**dadurch gekennzeichnet, dass** sie ferner umfasst:

ein Mittel (920) zum Bestimmen eines Backhaul-Routing-Schemas, einer Zuordnung und einer Bandbreitenzuteilung auf der Grundlage der erhobenen Netzinformationen;
ein Mittel (905) zum Benachrichtigen eines Maschenzugangspunkts über die Zuordnung, die Bandbreitenzuteilung und das Backhaul-Routing-Schema;
ein Mittel (905) zum Benachrichtigen eines Client-Knotens über die Zuordnung, wobei die Zuordnung ein Mechanismus ist, durch den der Client-Knoten mit dem Maschenzugangspunkt verknüpft wird; und
ein Mittel (905) zum Benachrichtigen des Client-Knotens über die Bandbreitenzuteilung für den Client-Knoten.

8. Vorrichtung nach Anspruch 7, die ferner ein Mittel zum Planen einer Datenübertragung auf der Grundlage der Bandbreitenzuteilung umfasst.

9. Vorrichtung nach Anspruch 7, bei der das Mittel zum Erheben unter Verwendung eines zentralisierten Medienzugangskontrollprotokolls oder eines verteilten Medienzugangskontrollprotokolls ausgeführt wird und bei der die Vorrichtung ein zentralisierter Controller ist, der in einem Gateway liegt.

10. Vorrichtung nach Anspruch 7, bei der das Mittel zum Bestimmen ferner ein Mittel zum Bestimmen einer Bandbreitenratenzuteilung mit maximalem Durchsatz oder einer Maximum-Minimum-Bandbreitenratenzuteilung umfasst.

11. Vorrichtung nach Anspruch 8, bei der das Mittel zum Planen unter Verwendung eines zentralisierten Medienzugangskontrollprotokolls ausgeführt wird.

12. Vorrichtung nach Anspruch 7, die ferner ein Mittel zum Empfangen aktualisierter Netzinformationen umfasst.

13. Verfahren zum Betreiben eines Maschenzugangspunkts, wobei das Verfahren bei dem Maschenzugangspunkt umfasst:

Messen der Übertragungsstreckenqualität und der Kanalbedingungen;

Berichten von Ergebnissen der Tätigkeit des Messens an einen Controller;
**dadurch gekennzeichnet, dass** es ferner bei dem Maschenzugangspunkt die folgenden Schritte umfasst:

Empfangen eines Backhaul-Routing-Schemas, einer Zuordnung und einer Bandbreitenzuteilung von dem Controller; und
Weiterleiten des Backhaul-Routing-Schemas, der Zuordnung und der Bandbreitenzuteilung zu einem Client-Knoten.

**14.** Vorrichtung zum Betreiben eines Maschenzugangspunkts, wobei die Vorrichtung umfasst:

ein Mittel zum Messen der Übertragungsstreckenqualität und der Kanalbedingungen;
ein Mittel zum Berichten von Ergebnissen der Tätigkeit des Messens an einen Controller;
**dadurch gekennzeichnet, dass** sie ferner umfasst:

ein Mittel zum Empfangen eines Backhaul-Routing-Schemas,
einer Zuordnung und einer Bandbreitenzuteilung von dem Controller; und
ein Mittel zum Weiterleiten des Backhaul-Routing-Schemas, der Zuordnung und der Bandbreitenzuteilung zu einem Client-Knoten.

**Revendications**

1. Un procédé, ledit procédé comprenant :

une collecte (605) d'informations de réseau ;
**caractérisé en ce qu'**il implique en outre les étapes de
détermination (610) d'un schéma de routage pour réseau d'amenée, d'une association et d'une allocation de bande passante basés sur lesdites informations de réseau collectées;
notification d'un point d'accès maillé de la dite association, ladite attribution de bande passante et ledit schéma de routage pour réseau d'amenée (615) ;
notification (615) d'un noeud client de ladite association, dans lequel ladite association est un mécanisme par l'intermédiaire duquel ledit noeud client devient affilié audit point d'accès maillé ; et
notification (620) dudit noeud client de ladite attribution de bande passante pour ledit noeud client.

2. Le procédé selon la revendication 1, comprenant en outre la programmation d'une transmission de données basée sur ladite allocation de bande passante.

3. Le procédé selon la revendication 1, dans lequel ladite action de collecte est effectuée via un protocole de contrôle d'accès au support centralisé ou un protocole de contrôle d'accès au support distribué et dans lequel ledit procédé est effectué par un contrôleur centralisé résident dans une passerelle.

4. Le procédé selon la revendication 1, dans lequel ladite action de détermination comprend en outre la détermination d'une allocation de taux de débit de bande passante maximum et d'une allocation maximum de taux de bande passante minimum.

5. Le procédé selon la revendication 2, dans lequel ladite action de programmation est effectuée via un protocole de contrôle d'accès au support centralisé.

6. Procédé selon la revendication 1, comprenant en outre la réception d'informations de réseau mises à jour.

7. Un appareil comprenant :

un moyen (915) de collecte d'informations de réseau ;
**caractérisé en ce qu'**il comprend en outre :

un moyen (920) de détermination d'un schéma de routage pour réseau d'amenée, d'une association et d'une a allocation de bande passante basés sur lesdites informations de réseau collectées;
un moyen (905) de notification d'un point d'accès maillé de ladite association, ladite allocation de bande

17

passante et ledit schéma de routage pour réseau d'amenée :

un moyen (905) de notification d'un noeud client de ladite association, dans lequel ladite association est un mécanisme grâce auquel ledit noeud client devient affilié audit point d'accès maillé ; et
un moyen (905) de notification dudit noeud client de ladite allocation de bande passante pour ledit noeud client.

**8.** L'appareil selon la revendication 7, comprenant en outre un moyen de programmation d'une transmission de données basée sur ladite allocation de bande passante.

**9.** L'appareil selon la revendication 7, dans lequel ledit moyen de collecte est effectué via un protocole de contrôle d'accès au support centralisé ou un protocole de contrôle d'accès au support distribué et dans lequel l'appareil est un contrôleur centralisé résident d'une passerelle.

**10.** L'appareil selon la revendication 7, dans lequel ledit moyen de détermination comprend en outre un des moyens de détermination d'une allocation de taux de débit de bande passante maximum et d'une allocation maximum de taux de bande passante minimum.

**11.** L'appareil selon la revendication 8, dans lequel ledit moyen de programmation est effectué à l'aide d'un protocole de contrôle d'accès au support centralisé.

**12.** L'appareil selon la revendication 7, comprenant en outre un moyen de réception d'informations de réseau mises à jour.

**13.** Un procédé pour le fonctionnement d'un point d'accès maillé, ledit procédé comprenant, audit point d'accès maillé :

une mesure de la qualité du lien et les conditions du canal ;
un report des résultats de ladite action de mesure à un contrôleur ;
**caractérisé en ce qu'**il implique en outre audit point d'accès maillé, les étapes de :

réception d'un schéma de routage pour réseau d'amenée, d'une association et d'une allocation de bande passante en provenance dudit contrôleur ; et
acheminement dudit schéma de routage pour réseau d'amenée, de ladite association et de l'allocation de la bande passante à un noeud client.

**14.** Un appareil pour le fonctionnement d'un point d'accès maillé, comprenant :

un moyen de mesurer la qualité du lien et les conditions du canal ;
un moyen de rapporter les résultats de ladite action de mesure à un contrôleur ;
**caractérisé en ce qu'**il comprend en outre :

un moyen de réception d'un schéma de routage pour réseau d'amenée, d'une association et d'une allocation de bande passante en provenance dudit contrôleur ; et
un moyen d'acheminer ledit schéma de routage pour réseau d'amenée, ladite association et l'allocation de la bande passante à un noeud client.

INTERNET/ WIRED NETWORK — 120

GATEWAY /BASE STATION — 115

— 125

MAP /RELAY NODE — 105

MAP /RELAY NODE

MAP /RELAY NODE

105

105

— 105

END DEVICE /STA

110

— 110

END DEVICE /STA

*FIG. 1*

EP 2 263 398 B1

**FIG. 2a**

**FIG. 2b**

**FIG. 2c**

```
        ( START )                              ( START )
            |                                       |
            v                                       v
┌────────────────────────────┐  305   ┌────────────────────────────────┐  405
│ COLLECT NETWORK INFORMATION │       │ MEASURE LINK QUALITY AND        │
│ FROM MAPs AND STAs          │       │ CHANNEL CONDITIONS              │
└────────────────────────────┘       └────────────────────────────────┘
            |                                       |
            v                                       v
┌────────────────────────────┐  310   ┌────────────────────────────────┐  410
│ DETERMINE THE OPTIMAL       │       │ REPORT MEASUREMENT TO          │
│ STA-MAP ASSOCIATION,        │       │ CENTRAL CONTROLLER             │
│ BACKHAUL ROUTING, AND       │       └────────────────────────────────┘
│ BANDWIDTH ALLOCATION        │                   |
│ USING ALGORITHM             │                   v
└────────────────────────────┘            ◇ 415
            |                       RECEIVE BACKHAUL ROUTING      NO
            v                       DECISION FROM CENTRAL  ──────→
┌────────────────────────────┐  315   CONTROLLER?
│ NOTIFY MAPs AND STAs OF     │            |
│ STA-MAP ASSOCIATION AND     │            | YES         420
│ BACKHAUL ROUTING DECISION   │            v
└────────────────────────────┘   ┌────────────────────────────────┐
            |                     │ UPDATE ROUTING AND DATA        │
            v                     │ FORWARDING POLICY ACCORDING    │
┌────────────────────────────┐  320  │ TO CENTRAL CONTROLLER'S      │
│ INSTRUCT CENTRALIZED MAC TO │     │ INSTRUCTION                    │
│ SCHEDULE TRANSMISSION BASED │     └────────────────────────────────┘
│ ON DETERMINED BANDWIDTH     │            |
│ ALLOCATION                  │            v
└────────────────────────────┘      ◇ 425
            |                  YES   CONTINUE?
            v              ←────
      ◇ 325                            | NO
 YES  NEED TO UPDATE                   v
←──── DECISION?                     ( END )
            | NO
```

**FIG. 3**

**FIG. 4**

**FIG. 6**

START

605 — COLLECT NETWORK INFORMATION FROM MAPs AND STAs

610 — DETERMINE THE OPTIMAL STA-MAP ASSOCIATION, BACKHAUL ROUTING, AND BANDWIDTH ALLOCATION USING ALGORITHM

615 — NOTIFY MAPs AND STAs OF STA-MAP ASSOCIATION AND BACKHAUL ROUTING DECISION

620 — NOTIFY STAs OF THEIR BANDWIDTH ALLOCATION

625 — NEED TO UPDATE DECISION?
YES
NO

**FIG. 5**

START

505 — MEASURE LINK QUALITY AND CHANNEL CONDITIONS

510 — REPORT MEASUREMENT TO CENTRAL CONTROLLER

515 — RECEIVE STA-MAP ASSOCIATION DECISION FROM CENTRAL CONTROLLER?
NO
YES

520 — UPDATE ASSOCIATION ACCORDING TO CENTRAL CONTROLLER'S INSTRUCTION

525 — CONTINUE?
YES
NO

END

START

MEASURE LINK QUALITY AND CHANNEL CONDITIONS — 705

REPORT MEASUREMENT TO CENTRAL CONTROLLER — 710

RECEIVE BACKHAUL ROUTING DECISION FROM CENTRAL CONTROLLER? — 715 — NO

YES — 720

UPDATE ROUTING AND DATA FORWARDING POLICY ACCORDING TO CENTRAL CONTROLLER'S INSTRUCTION

YES — CONTINUE? — 725

NO

END

**FIG. 7**

NETWORK INFORMATION COLLECTION — 915

DECISION MAKING — 920

DATA RATE CONTROL AND MAC — 925

RADIO COMMUNICATION INTERFACE — 905

WIRED COMMUNICATION INTERFACE — 910

**FIG. 9**

START

MEASURE LINK QUALITY AND CHANNEL CONDITIONS — 805

REPORT MEASUREMENT TO CENTRAL CONTROLLER — 810

RECEIVE STA-MAP ASSOCIATION DECISION FROM CENTRAL CONTROLLER? — 815

NO

YES — 820

UPDATE ASSOCIATION ACCORDING TO CENTRAL CONTROLLER'S INSTRUCTION

RECEIVE BANDWIDTH ALLOCATION DECISION FROM CENTRAL CONTROLLER? — 815

NO

YES — 820

UPDATE RATE CONTROL POLICY ACCORDING TO CENTRAL CONTROLLER'S INSTRUCTION

YES

CONTINUE? — 825

NO

END

*FIG. 8*

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060064497 A
- EP 2127423 A